# EUROPEAN PATENT APPLICATION

(11) **EP 4 439 950 A1**
(43) Date of publication of application: **02.10.2024**
(21) Application number: 24166881.3
(22) Date of filing: 27.03.2024
(51) Int. Cl.: H02M 1/08, H03K 17/12

(54) **POWER CONVERTER AND METHOD FOR ADJUSTING DRIVE RESISTANCE**

(30) Priority: 30.03.2023 CN 202310361464
(71) Applicant: Huawei Digital Power Technologies Co., Ltd., Futian District, Shenzhen, Guangdong 518043 (CN)
(72) Inventor: QIAN, Bin, Shenzhen, 518043 (CN); TANG, Yunyu, Shenzhen, 518043 (CN); ZHANG, Yaojia, Shenzhen, 518043 (CN); LIU, Chao, Shenzhen, 518043 (CN)
(74) Representative: Epping - Hermann - Fischer

(57) **Abstract**

This application provides a power converter, including a power conversion circuit, a drive circuit, and a controller. The drive circuit is connected to the power conversion circuit. The drive circuit is configured to: amplify a control signal from the controller, and drive a switching tube in the power conversion circuit to be turned on or off, to implement power conversion of the power conversion circuit. The controller is configured to: in response to a voltage of the power conversion circuit being greater than or equal to a first threshold, control the drive circuit to be in a first amplification mode; or the controller is configured to: in response to a voltage of the power conversion circuit being less than a first threshold, control the drive circuit to be in a second amplification mode. An equivalent drive resistance of the drive circuit corresponding to the first amplification mode is greater than an equivalent drive resistance of the drive circuit corresponding to the second amplification mode. In this application, the drive circuit may work in a plurality of working modes, and each working mode corresponds to a different equivalent drive resistance, so that the drive circuit can not only meet a stress specification, but also reduce a loss.

## Description

### TECHNICAL FIELD

Embodiments of this application relate to the field of electronic circuits, and specifically, to a power converter and a method for adjusting a drive resistance.

### BACKGROUND

In a power converter, a drive circuit is located between a power conversion circuit and a control circuit, and is configured to amplify a signal of the control circuit, so that the signal can drive a power transistor in the power conversion circuit. When the power conversion circuit works in a working condition with a risk of stress exceeding a specification, a resistor of the drive circuit needs to be as large as possible to reduce the stress. When the power conversion circuit works in a working condition with large stress margin, a resistor of the drive circuit needs to be as small as possible to reduce a loss of the drive circuit.

Currently, because a drive resistance is fixed, the drive circuit cannot achieve an optimal loss while ensuring that the stress meets the specification.

Therefore, how to enable the drive circuit to meet the stress specification and reduce the loss becomes an urgent problem to be resolved.

### SUMMARY

Embodiments of this application provide a power converter and a method for adjusting a drive resistance, so that a drive circuit in the power converter can change a drive resistance based on a working condition voltage. Therefore, the drive circuit can not only meet stress requirements of different working conditions, but also reduce a loss. According to a first aspect, a power converter is provided, including a power conversion circuit, a drive circuit, and a controller. The drive circuit is connected to the power conversion circuit. The drive circuit is configured to: amplify a control signal from the controller, and drive a switching tube in the power conversion circuit to be turned on or off, to implement power conversion of the power conversion circuit. The controller is configured to: in response to a voltage of the power conversion circuit being greater than or equal to a first threshold, control the drive circuit to be in a first amplification mode; or the controller is configured to: in response to a voltage of the power conversion circuit being less than a first threshold, control the drive circuit to be in a second amplification mode. An equivalent drive resistance of the drive circuit corresponding to the first amplification mode is greater than an equivalent drive resistance of the drive circuit corresponding to the second amplification mode.

The threshold in the foregoing solution may be set based on an actual requirement. This is not limited in this application.

In this application, an apparatus for controlling the switching tube in the power conversion circuit to be turned on or off and an apparatus for controlling the working mode of the drive circuit are collectively referred to as a controller.

The apparatus for controlling the switching tube in the power conversion circuit to be turned on or off and the apparatus for controlling the working mode of the drive circuit may be distributed on a same device, or may be distributed on different devices.

Further, the apparatus for controlling the switching tube in the power conversion circuit to be turned on or off and the apparatus for controlling the working mode of the drive circuit may be different units divided based on functions on a same physical controller. This is not limited in this application.

Based on the foregoing solution, the drive circuit in the power converter may work in a plurality of working modes, and each working mode corresponds to a different equivalent drive resistance, so that the equivalent drive resistance of the drive circuit can meet requirements of different working conditions, and flexibility of the drive circuit can be improved. In this way, the drive circuit can not only meet a stress specification, but also reduce a loss.

With reference to the first aspect, in some implementations of the first aspect, the drive circuit includes a first main drive circuit and a first auxiliary drive circuit. The first main drive circuit and the first auxiliary drive circuit are connected in parallel. The first main drive circuit includes a first resistor. The first auxiliary drive circuit includes a second resistor and a first switch, and the second resistor and the first switch are connected in series. The controller is configured to: in response to the voltage of the power conversion circuit being greater than or equal to the first threshold, control the first switch to be opened; or the controller is configured to: in response to the voltage of the power conversion circuit being less than the first threshold, control the first switch to be closed.

In the foregoing solution, the main drive circuit and the auxiliary drive circuit are connected in parallel. When the first switch in the auxiliary drive circuit is closed, the equivalent drive resistance of the drive circuit is equal to a value of the first resistor and the second resistor connected in parallel. When the first switch in the auxiliary drive circuit is opened, the equivalent drive resistance of the drive circuit is equal to a resistance value of the first resistor.

Based on the foregoing solution, switching of the working mode of the drive circuit and changing of the equivalent drive resistance can be implemented by controlling the first switch, so that a structure of the drive circuit is simplified and costs are reduced. In addition, the equivalent drive resistance of the drive circuit can meet requirements of different working conditions, meet a stress specification, and reduce a loss. Thus, flexibility and reliability of the drive circuit are improved.

With reference to the first aspect, in some implementations of the first aspect, the first auxiliary drive circuit further includes a drive blocking apparatus. The drive blocking apparatus is turned on in a first direction and turned off in a second direction, where the first direction is from the controller to the power conversion circuit, and the second direction is from the power conversion circuit to the controller. The first main drive circuit further includes an acceleration apparatus, and the acceleration apparatus is configured to enable the first main drive circuit to be connected earlier than the first auxiliary drive circuit.

In the foregoing solution, a turn-on direction of the drive blocking apparatus is related to a signal transmitted by the drive circuit. Specifically, if the signal transmitted by the drive circuit is an on signal, the turn-on direction of the drive blocking apparatus is from the controller to the power conversion circuit. If the signal transmitted by the drive circuit is an off signal, the turn-on direction of the drive blocking apparatus is from the power conversion circuit to the controller.

Based on the foregoing solution, by using the drive blocking apparatus and the acceleration apparatus, the main drive circuit may be connected earlier than the auxiliary drive circuit, to avoid generating a circulating current inside the drive circuit and avoid an additional loss.

With reference to the first aspect, in some implementations of the first aspect, the first auxiliary drive circuit further includes a drive blocking apparatus and a time delay apparatus. The drive blocking apparatus is turned on in a first direction and turned off in a second direction, the first direction is from the controller to the power conversion circuit, and the second direction is from the power conversion circuit to the controller. The time delay apparatus is configured to enable the first auxiliary drive circuit to be connected later than the first main drive circuit.

It should be noted that in the foregoing solution, the drive circuit may transmit an on signal.

Based on the foregoing solution, by using the drive blocking apparatus and the time delay apparatus, the auxiliary drive circuit in the drive circuit is connected later than the main drive circuit, to avoid generating a circulating current in the drive circuit and avoid an additional loss.

With reference to the first aspect, in some implementations of the first aspect, the first auxiliary drive circuit further includes a drive blocking apparatus. The drive blocking apparatus is turned off in a first direction and turned on in a second direction, where the first direction is from the controller to the power conversion circuit, and the second direction is from the power conversion circuit to the controller. The first main drive circuit further includes an acceleration apparatus, and the acceleration apparatus is configured to enable the first main drive circuit to be disconnected earlier than the first auxiliary drive circuit.

It should be noted that in the foregoing solution, the drive circuit may transmit an off signal.

Based on the foregoing solution, by using the drive blocking apparatus and the acceleration apparatus, the main drive circuit in the drive circuit is disconnected earlier than the auxiliary drive circuit, to avoid generating a circulating current inside the drive circuit and avoid an additional loss.

With reference to the first aspect, in some implementations of the first aspect, the first auxiliary drive circuit further includes a drive blocking apparatus and a time delay apparatus. The drive blocking apparatus is turned off in a first direction and turned on in a second direction, the first direction is from the controller to the power conversion circuit, and the second direction is from the power conversion circuit to the controller. The time delay apparatus is configured to enable the first auxiliary drive circuit to be disconnected later than the first main drive circuit.

It should be noted that in the foregoing solution, the drive circuit may transmit an off signal.

Based on the foregoing solution, by using the drive blocking apparatus and the time delay apparatus, the auxiliary drive circuit is disconnected later than the main drive circuit, to avoid generating a circulating current inside the drive circuit and avoid an additional loss.

With reference to the first aspect, in some implementations of the first aspect, the drive circuit includes a second main drive circuit and a second auxiliary drive circuit. The second main drive circuit and the second auxiliary drive circuit are connected in series. The second main drive circuit includes a third resistor. The second auxiliary drive circuit includes a fourth resistor and a second switch, and the fourth resistor and the second switch are connected in parallel. The controller is configured to: in response to the voltage of the power conversion circuit being greater than or equal to the first threshold, control the second switch to be opened; or the controller is configured to: in response to the voltage of the power conversion circuit being less than the first threshold, control the second switch to be closed.

In the foregoing solution, the main drive circuit and the auxiliary drive circuit are connected in series. When the second switch in the auxiliary drive circuit is closed, the equivalent drive resistance of the drive circuit is equal to a sequence connection value of the third resistor and the fourth resistor. When the second switch in the auxiliary drive circuit is opened, the equivalent drive resistance of the drive circuit is equal to a resistance value of the third resistor.

Based on the foregoing solution, switching of the working mode of the drive circuit and changing of the equivalent drive resistance can be implemented by controlling the second switch, so that a structure of the drive circuit is simplified and costs are reduced. In addition, the equivalent drive resistance of the drive circuit can meet requirements of different working conditions, meet a stress specification, and reduce a loss. Thus, flexibility and reliability of the drive circuit are improved.

According to a second aspect, a method for adjusting a drive resistor is provided, including: in response to a voltage of a power conversion circuit being greater than or equal to a first threshold, controlling a drive circuit to work in a first amplification mode; or in response to a voltage of a power conversion circuit being less than a first threshold, controlling a drive circuit to work in a second amplification mode. The power conversion circuit and the drive circuit are connected in series, and an equivalent drive resistance of the drive circuit corresponding to the first amplification mode is greater than an equivalent drive resistance of the drive circuit corresponding to the second amplification mode. Based on the foregoing solution, the working mode of the drive circuit may be controlled based on the voltage of the power conversion circuit, and each working mode corresponds to a different equivalent drive resistance, so that the equivalent drive resistance of the drive circuit can meet requirements of different working conditions, and flexibility of the drive circuit can be improved. In this way, the drive circuit can not only meet a stress specification, but also reduce a loss.

The threshold in the foregoing solution may be set based on an actual requirement. This is not limited in this application.

With reference to the second aspect, in some implementations of the second aspect, the method includes: in response to the voltage of the power conversion circuit being greater than or equal to the first threshold, opening a first switch; or in response to the voltage of the power conversion circuit being less than the first threshold, closing a first switch. The drive circuit includes a first main drive circuit and a first auxiliary drive circuit that are connected in parallel. The first main drive circuit includes a first resistor, and the first auxiliary drive circuit includes the first switch and a second resistor that are connected in series.

In the foregoing solution, the main drive circuit and the auxiliary drive circuit are connected in parallel. When the first switch in the auxiliary drive circuit is closed, the equivalent drive resistance of the drive circuit is equal to a value of the first resistor and the second resistor connected in parallel. When the first switch in the auxiliary drive circuit is opened, the equivalent drive resistance of the drive circuit is equal to a resistance value of the first resistor.

Based on the foregoing solution, switching of the working mode of the drive circuit and changing of the equivalent drive resistance can be implemented by controlling the first switch, so that a structure of the drive circuit is simplified and costs are reduced. In addition, the equivalent drive resistance of the drive circuit can meet requirements of different working conditions, meet a stress specification, and reduce a loss. Thus, flexibility and reliability of the drive circuit are improved.

With reference to the second aspect, in some implementations of the second aspect, the method includes: in response to the voltage of the power conversion circuit being greater than or equal to the first threshold, opening a second switch; or in response to the voltage of the power conversion circuit being less than the first threshold, closing a second switch. The drive circuit includes a second main drive circuit and a second auxiliary drive circuit that are connected in series. The second main drive circuit includes a third resistor, and the second auxiliary drive circuit includes the second switch and a fourth resistor that are connected in parallel.

In the foregoing solution, the main drive circuit and the auxiliary drive circuit are connected in series. When the second switch in the auxiliary drive circuit is closed, the equivalent drive resistance of the drive circuit is equal to a sequence connection value of the third resistor and the fourth resistor. When the first switch in the auxiliary drive circuit is opened, the equivalent drive resistance of the drive circuit is equal to a resistance value of the third resistor.

Based on the foregoing solution, switching of the working mode of the drive circuit and changing of the equivalent drive resistance can be implemented by controlling the second switch, so that a structure of the drive circuit is simplified and costs are reduced. In addition, the equivalent drive resistance of the drive circuit can meet requirements of different working conditions, meet a stress specification, and reduce a loss. Thus, flexibility and reliability of the drive circuit are improved.

### BRIEF DESCRIPTION OF DRAWINGS

FIG. 1 is a schematic diagram of an application scenario according to an embodiment of this application;
FIG. 2 is a schematic diagram of a structure of a power converter according to an embodiment of this application;
FIG. 3 is a schematic diagram of a method for adjusting a drive resistor according to an embodiment of this application;
FIG. 4 is a schematic diagram of a drive circuit according to an embodiment of this application;
FIG. 5 is a schematic diagram of another drive circuit according to an embodiment of this application;
FIG. 6 is a schematic diagram of still another drive circuit according to an embodiment of this application;
FIG. 7 is a schematic diagram of a signal for accelerating a connection according to an embodiment of this application;
FIG. 8 is a schematic diagram of a signal for accelerating a disconnection according to an embodiment of this application;
FIG. 9 is a schematic diagram of still another drive circuit according to an embodiment of this application;
FIG. 10 is a schematic diagram of still another drive circuit according to an embodiment of this application; and
FIG. 11 is a schematic diagram of still another drive circuit according to an embodiment of this application.

### DESCRIPTION OF EMBODIMENTS

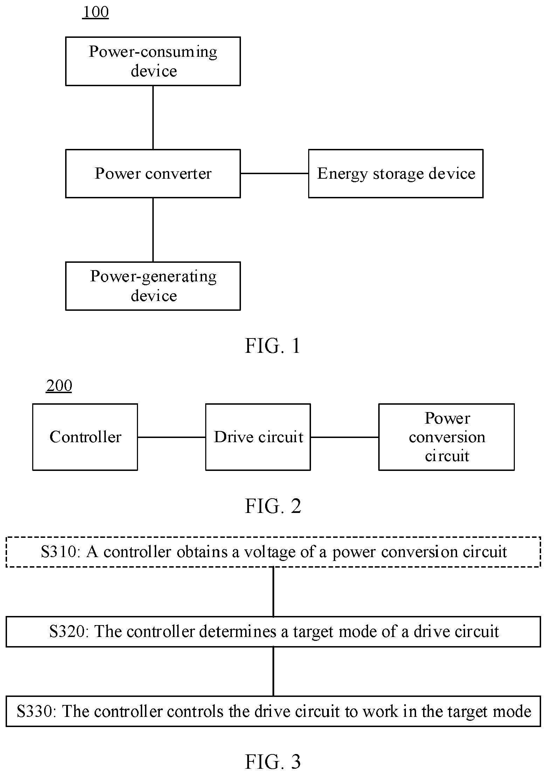

FIG. 1 is a schematic diagram of an application scenario according to an embodiment of this application. This application may be applied to a power system 100.

As shown in FIG. 1, the power system 100 includes a power-generating device, a power-consuming device, and a power converter. The power-generating device and the power-consuming device may be connected through the power converter. In a possible implementation, the power system 100 further includes an energy storage device, and the energy storage device may be charged or discharged. The energy storage device may be connected to the power-generating device and the power-consuming device through the power converter.

The power-generating device in this application is configured to output electric energy, and may be a conventional generator, or may be a new energy power-generating device. For example, the power-generating device may include a solar photovoltaic panel, a wind turbine, or the like. In addition, the electric energy output by the power-generating device may be an alternating current or a direct current. This is not limited in this application.

The power-consuming device in this application is configured to consume electric energy, and may be an alternating current load or a direct current load. This is not limited in this application.

The energy storage device in this application may be charged or discharged. For example, the energy storage device may include an energy storage battery.

In a possible implementation, when the electric energy output by the power-generating device exceeds the electric energy consumed by the power-consuming device, the energy storage device may store, through charging, excess electric energy of the power-generating device. When the electric energy output by the power-generating device cannot meet the electric energy consumed by the power-consuming device, the energy storage device may provide, through discharging, electric energy for the power-consuming device.

In a possible implementation, the energy storage device is charged in a valley section of an alternating current power grid, and discharges in a peak section of the alternating current power grid.

In this application, the power converter is configured to perform electric energy conversion between different devices. The power converter may include one or more of a direct current/direct current converter, a direct current/alternating current converter, an alternating current/direct current converter, or a bidirectional converter. It should be understood that all devices that can implement a power conversion function may be considered as the power converter in this application.

For example, if the power-generating device sends a direct current, the power-consuming device needs to use an alternating current, and the energy storage device supports a direct current, the power converter may convert the direct current of the power-generating device into an alternating current and send the alternating current to the power-consuming device, and convert the direct current of the power-generating device into a direct current with a different specification and send the direct current to the energy storage device.

FIG. 2 is a schematic diagram of a structure of a power converter according to an embodiment of this application. As shown in FIG. 2, the power converter in embodiments of this application includes a drive circuit, a controller, and a power conversion circuit. The drive circuit is connected to the power conversion circuit.

The drive circuit amplifies a control signal from the controller, and drives a switching tube in the power conversion circuit to be turned on or off, to implement power conversion of the power conversion circuit. The drive circuit may have a plurality of working modes, and each working mode corresponds to a different equivalent drive resistance. For example, the drive circuit receives a pulse width modulation (PWM) wave from the controller, and the drive circuit amplifies the PWM enough to drive a power transistor, and then sends the PWM to the power transistor in the power conversion circuit.

If the controller determines that a voltage of the power conversion circuit is greater than or equal to a first threshold, the controller controls the drive circuit to be in a first amplification mode. If the controller determines that a voltage of the power conversion circuit is less than a first threshold, the controller controls the drive circuit to be in a second amplification mode. An equivalent drive resistance of the drive circuit corresponding to the first amplification mode is greater than an equivalent drive resistance of the drive circuit corresponding to the second amplification mode.

In this application, the controller may not only drive the switching tube in the power conversion circuit to be turned on or off, but also control the working mode of the drive circuit. In a possible implementation, driving the switching tube in the power conversion circuit to be turned on or off corresponds to a first control unit, and controlling the working mode of the drive circuit corresponds to a second control unit. The first control unit and the second control unit may be integrated into a same physical controller, or may be distributed on different physical controllers. This is not limited in this application.

It should be understood that, in this application, the controller may obtain the voltage of the power conversion circuit. In a possible implementation, the controller includes a detection circuit, where the detection circuit is configured to detect the voltage of the power conversion circuit.

In a possible implementation, the controller obtains the voltage of the power conversion circuit from an external detection circuit. The controller may directly obtain the voltage of the power conversion circuit from the external detection circuit, or may obtain, from the external detection circuit, a parameter that can reflect the voltage of the power conversion circuit, for example, a current of the power conversion circuit.

It should be understood that the first threshold may be set based on an actual working requirement. This is not limited in this application.

Based on the foregoing solution, the drive circuit in the power converter may work in a plurality of working modes, and each working mode corresponds to a different equivalent drive resistance, so that the equivalent drive resistance of the drive circuit can meet requirements of different working conditions, and flexibility of the drive circuit can be improved. In this way, the drive circuit can not only meet a stress specification, but also reduce a loss.

FIG. 3 is a schematic diagram of a method for adjusting a drive resistor according to an embodiment of this application. An execution body of the method is the controller in FIG. 2. As shown in FIG. 3, the method includes the following steps.

Optionally, S310: The controller obtains a voltage of the power conversion circuit. Specifically, in this application, the controller may directly obtain the voltage of the power conversion circuit, or may obtain a parameter that can indicate the voltage of the power conversion circuit, to indirectly obtain the voltage of the power conversion circuit. For example, the parameter that can indicate the voltage of the power conversion circuit includes a current of the power conversion circuit and a temperature of a component on the power conversion circuit.

In a possible implementation, the controller includes a detection circuit, and the detection circuit is configured to detect the voltage of the power conversion circuit or a parameter that can indicate the voltage of the power conversion circuit.

In a possible implementation, the controller obtains the voltage of the power conversion circuit or the parameter that can indicate the voltage of the power conversion circuit from an external detection circuit.

S320: The controller determines a target mode of the drive circuit.

Specifically, if the controller determines that the voltage of the power conversion circuit is greater than or equal to a first threshold, the controller controls the drive circuit to be in a first amplification mode. If the controller determines that the voltage of the power conversion circuit is less than the first threshold, the controller controls the drive circuit to be in a second amplification mode. An equivalent drive resistance of the drive circuit corresponding to the first amplification mode is greater than an equivalent drive resistance of the drive circuit corresponding to the second amplification mode.

S330: The controller controls the drive circuit to work in the target mode.

Based on the foregoing solution, the working mode of the drive circuit may be controlled based on the voltage of the power conversion circuit, and each working mode corresponds to a different equivalent drive resistance, so that the equivalent drive resistance of the drive circuit can meet requirements of different working conditions, and flexibility of the drive circuit can be improved. In this way, the drive circuit can not only meet a stress specification, but also reduce a loss.

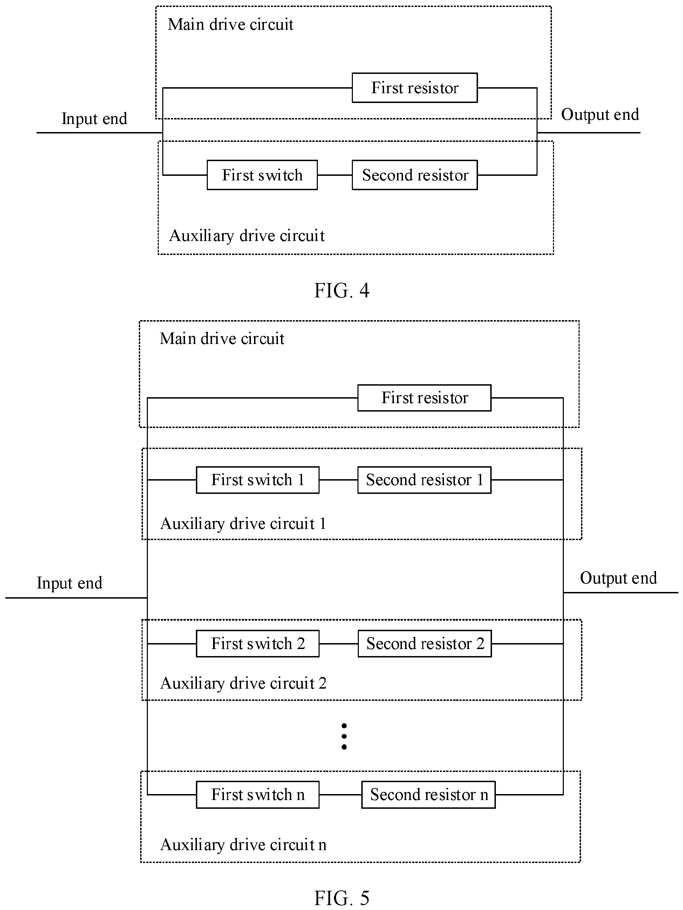

FIG. 4 is a schematic diagram of a drive circuit according to an embodiment of this application.

As shown in FIG. 4, the drive circuit includes a main drive circuit and an auxiliary drive circuit, where the main drive circuit and the auxiliary drive circuit are connected in parallel.

The main drive circuit includes a first resistor, one end of the first resistor is connected to an input end, and the other end is connected to an output end.

The auxiliary drive circuit includes a second resistor and a first switch, where the second resistor and the first switch are connected in series. The first switch is configured to control, based on a signal sent by the controller, the auxiliary drive circuit to be connected or disconnected. For example, if the first switch is closed under control of the controller, the auxiliary drive circuit is connected. If the first switch is opened under control of the controller, the auxiliary drive circuit is disconnected.

Specifically, if the controller determines that the voltage of the power conversion circuit is less than the first threshold, the controller controls the first switch to be opened. In this case, the drive circuit works in the first working mode in FIG. 3. If the controller determines that the voltage of the power conversion circuit is greater than or equal to the first threshold, the controller controls the first switch to be closed. In this case, the drive circuit works in the second working mode in FIG. 3.

In this application, the first switch may be any component that can implement the foregoing functions. This is not limited in this application. For example, the first switch may include at least one of the following: a unidirectional controllable connection/disconnection component, a bidirectional controllable connection/disconnection circuit, or a circuit for transmitting or cutting a signal. Specifically, the unidirectional controllable connection/disconnection component may include a triode or a MOS transistor. The bidirectional controllable connection/disconnection circuit may include a circuit that has a bidirectional controllable connection/disconnection function and that includes the unidirectional controllable connection/disconnection component. The circuit for transmitting or cutting a signal may include a 244 circuit.

In a possible implementation, the controller may send an enable signal to the first switch.

It should be understood that in this application, components connected in series on a same branch may exchange locations with each other, and implementation of the solutions in this application is not affected. To avoid repeated description, only a part of distribution manners of the components is shown in this application, and another distribution manner shall also fall within the protection scope of this application.

For example, a connection relationship in the auxiliary drive circuit may also be that one end of the second resistor is connected to the first switch, and the other end is connected to the input end. One end of the first switch is connected to the output end, and the other end is connected to the second resistor.

In the foregoing solution, the main drive circuit and the auxiliary drive circuit are connected in parallel. When the first switch in the auxiliary drive circuit is closed, the equivalent drive resistance of the drive circuit is equal to a value of the first resistor and the second resistor connected in parallel. When the first switch in the auxiliary drive circuit is opened, the equivalent drive resistance of the drive circuit is equal to a resistance value of the first resistor.

Based on the foregoing solution, switching of the working mode of the drive circuit and changing of the equivalent drive resistance can be implemented by controlling the first switch, so that a structure of the drive circuit is simplified and costs are reduced. In addition, the equivalent drive resistance of the drive circuit can meet requirements of different working conditions, meet a stress specification, and reduce a loss. Thus, flexibility and reliability of the drive circuit are improved.

The following drive circuits in FIG. 5 to FIG. 7 are further optimized for the drive circuit in FIG. 4.

FIG. 5 is a schematic diagram of another drive circuit according to an embodiment of this application.

As shown in FIG. 5, the drive circuit includes a main drive circuit and a plurality of auxiliary drive circuits. For a composition and a connection relationship of the main drive circuit and the auxiliary drive circuit, refer to related descriptions in FIG. 4. Details are not described herein again.

It should be understood that, in embodiments of this application, each auxiliary drive circuit may correspond to one input end, or a plurality of auxiliary drive circuits may share one input end. Similarly, each auxiliary drive circuit may correspond to one output end, or a plurality of auxiliary drive circuits may share one output end. Each auxiliary drive circuit may correspond to one controller, or a plurality of auxiliary drive circuits may share one controller apparatus. Each auxiliary drive circuit may correspond to one switch, or a plurality of auxiliary drive circuits may share one switch. This is not limited in this application.

Based on the foregoing solution, a plurality of auxiliary drive circuits may be controlled by one controller, to implement a variable drive function, so that control resources are saved.

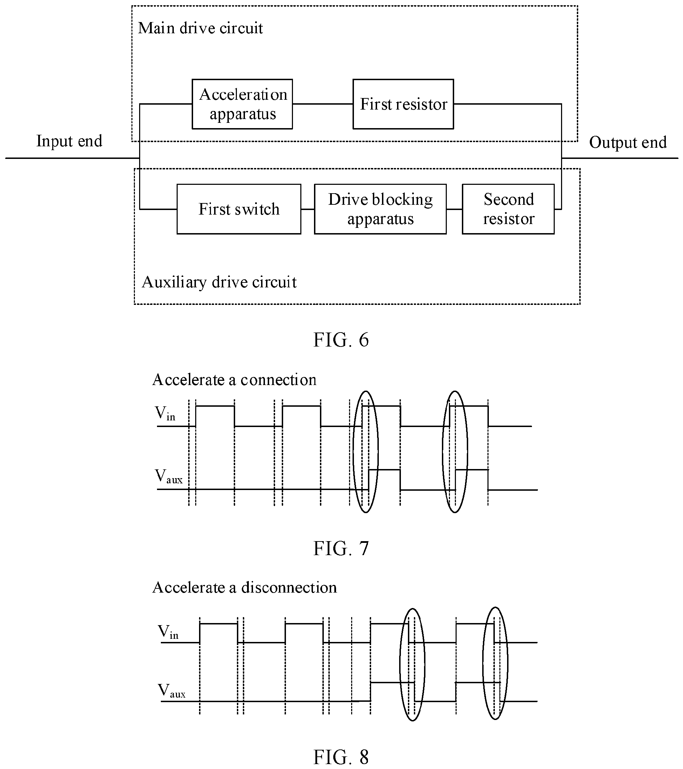

FIG. 6 is a schematic diagram of still another drive circuit according to an embodiment of this application.

As shown in FIG. 6, the drive circuit includes a main drive circuit and an auxiliary drive circuit.

The main drive circuit includes an acceleration apparatus and a first resistor. The acceleration apparatus and the first resistor are connected in series. The acceleration apparatus is configured to enable the main drive circuit to operate before the auxiliary drive circuit. For example, the acceleration apparatus may include an RC parallel circuit.

The auxiliary drive circuit includes a first switch, a second resistor, and a drive blocking apparatus. The drive blocking apparatus is connected in series with the first switch and the second resistor. The drive blocking apparatus has directionality, that is, the drive blocking apparatus is only turned on in a specific direction and turned off in another direction.

The drive blocking apparatus may include any circuit or device that can implement the foregoing functions. For example, the drive blocking apparatus may include a diode.

Specifically, if the drive blocking apparatus is turned on in a first direction and turned off in a second direction, the drive blocking apparatus enables the auxiliary drive circuit to be connected when an on signal is on, and enables the auxiliary drive circuit to be disconnected when an off signal is on. If the drive blocking apparatus is turned off in the first direction and turned on in the second direction, the drive blocking apparatus enables the auxiliary drive circuit to be connected when the off signal is on, and enables the auxiliary drive circuit to be disconnected when the on signal is on. The first direction is from the controller to the power conversion circuit, and the second direction is from the power conversion circuit to the controller.

In a possible implementation, if the drive blocking apparatus is turned on in the first direction and turned off in the second direction, the acceleration apparatus is configured to enable the main drive circuit to be connected earlier than the auxiliary drive circuit. In this case, the drive blocking apparatus and the acceleration apparatus play a role of accelerating a connection. Signal transmission on the main drive circuit and the auxiliary drive circuit is shown in FIG. 7.

FIG. 7 is a schematic diagram of a signal for accelerating a connection according to an embodiment of this application. As shown in FIG. 7, Vᵢₙ indicates a signal on the main drive circuit, Vₐᵤₓ indicates a signal on the auxiliary drive circuit. A high electrical level indicates connection, and a low electrical level indicates disconnection. It can be seen from the figure that a signal on the main drive circuit increases to the high electrical level before a signal on the auxiliary drive circuit, that is, the main drive circuit is connected earlier than the auxiliary drive circuit.

In a possible implementation, if the drive blocking apparatus is turned off in the first direction and turned on in the second direction, the acceleration apparatus is configured to enable the main drive circuit to be disconnected earlier than the auxiliary drive circuit. In this case, the drive blocking apparatus and the acceleration apparatus play a role of accelerating a disconnection. Signal transmission on the main drive circuit and the auxiliary drive circuit is shown in FIG. 8.

FIG. 8 is a schematic diagram of a signal for accelerating a disconnection according to an embodiment of this application. As shown in FIG. 8, Vᵢₙ indicates a signal on the main drive circuit, Vₐᵤₓ indicates a signal on the auxiliary drive circuit. A high electrical level indicates connection, and a low electrical level indicates disconnection. It can be seen from the figure that a signal on the main drive circuit decreases to the low electrical level before a signal on the auxiliary drive circuit, that is, the main drive circuit is disconnected earlier than the auxiliary drive circuit.

It should be understood that the foregoing optimization may also be applied to all or some of the auxiliary drive circuits in FIG. 5.

Based on the foregoing solution, by using the drive blocking apparatus and the acceleration apparatus, the main drive circuit may be connected or disconnected earlier than the auxiliary drive circuit, to avoid generating a circulating current inside the drive circuit and avoid an additional loss.

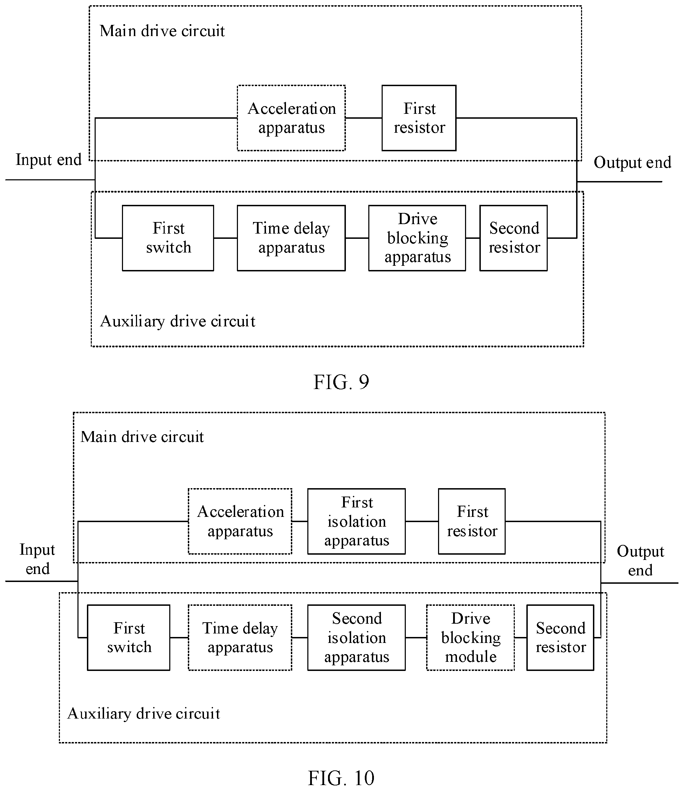

FIG. 9 is a schematic diagram of still another drive circuit according to an embodiment of this application.

As shown in FIG. 9, the drive circuit includes a main drive circuit and an auxiliary drive circuit.

The main drive circuit includes a first resistor.

The auxiliary drive circuit includes a first switch, a second resistor, a time delay apparatus, and a drive blocking apparatus. The first switch, the second resistor, the time delay apparatus, and the drive blocking apparatus are connected in series. For descriptions of the first switch, the second resistor, and the drive blocking apparatus, refer to FIG. 6. Details are not described herein in this application. The time delay apparatus is configured to enable the auxiliary drive circuit to operate after the main drive circuit. For example, the time delay apparatus may include an RC voltage divider circuit.

In a possible implementation, if the drive blocking apparatus is turned on in the first direction and turned off in the second direction, the acceleration apparatus is configured to enable the main drive circuit to be connected earlier than the auxiliary drive circuit. In this case, the drive blocking apparatus and the time delay apparatus play a role of accelerating a connection of the main drive circuit. Signal transmission on the main drive circuit and the auxiliary drive circuit is shown in FIG. 7.

FIG. 7 is a schematic diagram of a signal for accelerating a connection according to this application. As shown in FIG. 7, Vᵢₙ indicates a signal on the main drive circuit, Vₐᵤₓ indicates a signal on the auxiliary drive circuit. A high electrical level indicates connection, and a low electrical level indicates disconnection. It can be seen from the figure that a signal on the auxiliary drive circuit increases to the high electrical level after a signal on the main drive circuit, that is, the auxiliary drive circuit is connected later than the main drive circuit.

In a possible implementation, if the drive blocking apparatus is turned off in the first direction and turned on in the second direction, the acceleration apparatus is configured to enable the main drive circuit to be disconnected earlier than the auxiliary drive circuit. In this case, the drive blocking apparatus and the acceleration apparatus play a role of accelerating a disconnection of the main drive circuit. Signal transmission on the main drive circuit and the auxiliary drive circuit is shown in FIG. 8.

FIG. 8 is a schematic diagram of a signal for accelerating a disconnection according to this application. As shown in FIG. 8, Vᵢₙ indicates a signal on the main drive circuit, Vₐᵤₓ indicates a signal on the auxiliary drive circuit. A high electrical level indicates connection, and a low electrical level indicates disconnection. It can be seen from the figure that a signal on the auxiliary drive circuit decreases to the low electrical level after a signal on the main drive circuit, that is, the auxiliary drive circuit is disconnected later than the main drive circuit.

It should be understood that the foregoing optimization may also be applied to all or some of the auxiliary drive circuits in FIG. 5.

It should be understood that, in this application, an acceleration apparatus may be added to the main drive circuit, and a time delay apparatus may be added to the auxiliary drive circuit, so that the main drive circuit is connected or disconnected earlier than the auxiliary drive circuit.

Based on the foregoing solution, by using the drive blocking apparatus and the time delay apparatus, the main drive circuit may be connected or disconnected earlier than the auxiliary drive circuit, to avoid generating a circulating current inside the drive circuit and avoid an additional loss.

FIG. 10 is a schematic diagram of still another drive circuit according to an embodiment of this application.

As shown in FIG. 10, in this embodiment of this application, an isolation apparatus is newly added to the main drive circuit and/or the auxiliary drive circuit. For ease of description, an isolation apparatus in the main drive circuit is referred to as a first isolation apparatus, and an isolation apparatus in the auxiliary drive circuit is referred to as a second isolation apparatus.

The isolation apparatus is configured to isolate a controller from a power conversion circuit, to avoid interference of a power stage circuit on a control signal or adapt to a scenario in which a control circuit and a main circuit do not share a same grounding. The isolation apparatus may implement at least one of optical isolation, magnetic isolation, and capacitive isolation. For example, the isolation apparatus may include at least one of an optoelectronic coupler, an isolation capacitor, and an isolation transformer.

Based on the foregoing solution, an electrical isolation capability of the drive circuit can be improved based on the isolation apparatus, so that reliability of the drive circuit is improved and a scenario in which the main drive circuit and the auxiliary drive circuit do not share a same grounding is adapted.

In FIG. 4 to FIG. 10, the main drive circuits and the auxiliary drive circuits are respectively in a parallel connection relationship. In addition, this application further includes a drive circuit in which a main drive circuit and an auxiliary drive circuit are not in a parallel connection relationship.

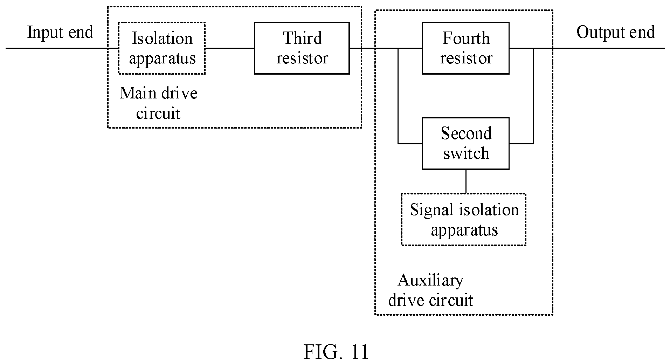

FIG. 11 is a schematic diagram of still another drive circuit according to an embodiment of this application.

As shown in FIG. 11, the drive circuit includes a main drive circuit and an auxiliary drive circuit, where the main drive circuit and the auxiliary drive circuit are connected in series.

The main drive circuit includes a third resistor.

The auxiliary drive circuit includes a fourth resistor and a second switch, where the fourth resistor and the second switch are connected in parallel. The second switch is configured to control, based on a signal sent by a controller, the auxiliary drive circuit to be connected or disconnected. For example, if the second switch is closed under control of the controller, the auxiliary drive circuit is connected. If the second switch is opened under control of the controller, the auxiliary drive circuit is disconnected.

Specifically, if the controller determines that a voltage of the power conversion circuit is less than a first threshold, the controller controls the second switch to be opened. In this case, the drive circuit works in the first working mode in FIG. 3, and an equivalent drive resistance of the drive circuit is that the third resistor and the fourth resistor are connected in parallel. If the controller determines that the voltage of the power conversion circuit is greater than or equal to the first threshold, the controller controls the second switch to be closed. In this case, the drive circuit works in the second working mode in FIG. 3, the fourth resistor is short-circuited, and an equivalent drive resistance of the drive circuit is the third resistor.

In this application, for the description of the second switch, refer to the description of the first switch in FIG. 4. Details are not described herein again.

In a possible implementation, the drive circuit in FIG. 11 further includes a signal isolation apparatus. The signal isolation apparatus is configured to implement communication isolation between the controller and the second switch, to improve circuit security and reliability.

In the foregoing solution, the main drive circuit and the auxiliary drive circuit are connected in series. When the second switch in the auxiliary drive circuit is closed, the equivalent drive resistance of the drive circuit is equal to a value of the third resistor and the fourth resistor connected in parallel. When the second switch in the auxiliary drive circuit is opened, the equivalent drive resistance of the drive circuit is equal to a resistance value of the third resistor.

Based on the foregoing solution, switching of the working mode of the drive circuit and changing of the equivalent drive resistance can be implemented by controlling the second switch, so that a structure of the drive circuit is simplified and costs are reduced. In addition, the equivalent drive resistance of the drive circuit can meet requirements of different working conditions, meet a stress specification, and reduce a loss. Thus, flexibility and reliability of the drive circuit are improved.

It should be noted that, in this application, components connected in series on a same branch may exchange locations with each other, and implementation of functions of the drive circuit is not affected. For ease of description, this application does not show all distributions. However, it should be understood that a case in which components that are connected in series on a same branch exchange locations with each other shall also fall within the protection scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, apparatuses may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

In the several embodiments provided in this application, it should be understood that the disclosed system and apparatus may be implemented in other manners. For example, the described apparatus embodiment is merely an example. For example, the apparatus division is merely logical function division and may be other division in actual implementation. For example, a plurality of apparatuses or components may be combined or integrated into another system, or some features may be ignored or not performed. In addition, the displayed or discussed mutual couplings or direct couplings or communication connections may be implemented through some interfaces, indirect couplings or communication connections between the apparatuses, or electrical connections, mechanical connections, or connections in other forms.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, comprising:
a power conversion circuit, a drive circuit, and a controller, wherein
the drive circuit is connected to the power conversion circuit;
the drive circuit is configured to: amplify a control signal from the controller, and drive a switching tube in the power conversion circuit to be turned on or off, to implement power conversion of the power conversion circuit; and
the controller is configured to: in response to a voltage of the power conversion circuit being greater than or equal to a first threshold, control the drive circuit to be in a first amplification mode; or
the controller is configured to: in response to a voltage of the power conversion circuit being less than a first threshold, control the drive circuit to be in a second amplification mode, wherein
an equivalent drive resistance of the drive circuit corresponding to the first amplification mode is greater than an equivalent drive resistance of the drive circuit corresponding to the second amplification mode.

2. The power converter according to claim 1, wherein the drive circuit comprises:
a first main drive circuit and a first auxiliary drive circuit, wherein
the first main drive circuit and the first auxiliary drive circuit are connected in parallel;
the first main drive circuit comprises a first resistor;
the first auxiliary drive circuit comprises a second resistor and a first switch, and the second resistor and the first switch are connected in series; and
the controller is configured to: in response to the voltage of the power conversion circuit being greater than or equal to the first threshold, control the first switch to be opened; or
the controller is configured to: in response to the voltage of the power conversion circuit being less than the first threshold, control the first switch to be closed.

3. The power converter according to claim 2, wherein
the first auxiliary drive circuit further comprises a drive blocking apparatus, the drive blocking apparatus is turned on in a first direction and turned off in a second direction, the first direction is from the controller to the power conversion circuit, and the second direction is from the power conversion circuit to the controller; and
the first main drive circuit further comprises an acceleration apparatus, and the acceleration apparatus is configured to enable the first main drive circuit to be connected earlier than the first auxiliary drive circuit.

4. The power converter according to claim 2, wherein
the first auxiliary drive circuit further comprises a drive blocking apparatus and a time delay apparatus;
the drive blocking apparatus is turned on in a first direction and turned off in a second direction, the first direction is from the controller to the power conversion circuit, and the second direction is from the power conversion circuit to the controller; and
the time delay apparatus is configured to enable the first auxiliary drive circuit to be connected later than the first main drive circuit.

5. The power converter according to claim 2, wherein
the first auxiliary drive circuit further comprises a drive blocking apparatus, the drive blocking apparatus is turned off in a first direction and turned on in a second direction, the first direction is from the controller to the power conversion circuit, and the second direction is from the power conversion circuit to the controller; and
the first main drive circuit further comprises an acceleration apparatus, and the acceleration apparatus is configured to enable the first main drive circuit to be disconnected earlier than the first auxiliary drive circuit.

6. The power converter according to claim 2, wherein
the first auxiliary drive circuit further comprises a drive blocking apparatus and a time delay apparatus;
the drive blocking apparatus is turned off in a first direction and turned on in a second direction, the first direction is from the controller to the power conversion circuit, and the second direction is from the power conversion circuit to the controller; and
the time delay apparatus is configured to enable the first auxiliary drive circuit to be disconnected later than the first main drive circuit.

7. The power converter according to claim 1, wherein the drive circuit comprises:
a second main drive circuit and a second auxiliary drive circuit, wherein
the second main drive circuit and the second auxiliary drive circuit are connected in series;
the second main drive circuit comprises a third resistor;
the second auxiliary drive circuit comprises a fourth resistor and a second switch, and the fourth resistor and the second switch are connected in parallel; and
the controller is configured to: in response to the voltage of the power conversion circuit being greater than or equal to the first threshold, control the second switch to be opened; or
the controller is configured to: in response to the voltage of the power conversion circuit being less than the first threshold, control the second switch to be closed.

8. A method for adjusting a drive resistance, comprising:
in response to a voltage of a power conversion circuit being greater than or equal to a first threshold, controlling a drive circuit to work in a first amplification mode; or
in response to a voltage of a power conversion circuit being less than a first threshold, controlling a drive circuit to work in a second amplification mode, wherein
the power conversion circuit and the drive circuit are connected in series, and an equivalent drive resistance of the drive circuit corresponding to the first amplification mode is greater than an equivalent drive resistance of the drive circuit corresponding to the second amplification mode.

9. The method according to claim 8, wherein the method comprises:
in response to the voltage of the power conversion circuit being greater than or equal to the first threshold, opening a first switch; or
in response to the voltage of the power conversion circuit being less than the first threshold, closing a first switch, wherein
the drive circuit comprises a first main drive circuit and a first auxiliary drive circuit that are connected in parallel; and
the first main drive circuit comprises a first resistor, and the first auxiliary drive circuit comprises the first switch and a second resistor that are connected in series.

10. The method according to claim 8, wherein the method comprises:
in response to the voltage of the power conversion circuit being greater than or equal to the first threshold, opening a second switch; or
in response to the voltage of the power conversion circuit being less than the first threshold, closing a second switch, wherein
the drive circuit comprises a second main drive circuit and a second auxiliary drive circuit that are connected in series; and
the second main drive circuit comprises a third resistor, and the second auxiliary drive circuit comprises the second switch and a fourth resistor that are connected in parallel.
